## Europäisches Patentamt
## European Patent Office
## Office européen des brevets

(19)

(11) Publication number: **0 011 491**
**A1**

(12) # EUROPEAN PATENT APPLICATION

(21) Application number: **79302587.5**

(22) Date of filing: **15.11.79**

(51) Int. Cl.³: **G 01 B 5/255**

(30) Priority: **16.11.78 AU 6801/78**
**10.09.79 AU 396/79**

(43) Date of publication of application:
**28.05.80 Bulletin 80/11**

(84) Designated Contracting States:
**AT BE CH DE FR GB IT LU NL SE**

(71) Applicant: **REPCO LIMITED**
**630, St. Kilda Road**
**Melbourne 3004 Victoria(AU)**

(72) Inventor: **Harant, Gerhart Wilhelm**
**15, Harold Street**
**Blackburn 3130 Victoria(AU)**

(72) Inventor: **Miller, Keith**
**"Wattlebrae" Emerald Road**
**Upper Beaconsfield Victoria, 3808(AU)**

(74) Representative: **Kirk, Geoffrey Thomas et al,**
**BATCHELLOR, KIRK & EYLES 2, Pear Tree Court**
**Farringdon Road**
**London EC1R 0DS(GB)**

(54) **Method and apparatus for measuring vehicle track alignment.**

(57) The invention relates to a simple method and apparatus for measuring vehicle track alignment (toe-in and toe-out). The vehicle front wheels (10) are each supported on a pair of spaced parallel support rollers (11) and a sensing roller (13) is arranged in contact with the tyre tread surface at the lowermost point of the tyre (12) and normal to the longitudinal axis of the vehicle, that is, normal to the true forward direction of the vehicle. The sensing roller (13) is able to move axially on its axis of rotation (axle) (16). The method comprises rotating each front wheel (10) separately through a limited angular rotation equivalent to a known forward displacement of the vehicle and measuring the axial displacement of the sensing roller (13). The forward displacement and axial displacement figures may then be used to compute toe-in or toe-out and the same procedure may then be performed on the other wheel. The apparatus includes a mounting structure which extends across the width of the vehicle and supports the support rollers on each side. The mounting structure is pivoted between the vehicle wheels such that the apparatus automatically aligns with the apparatus. Means for obtaining a differential reading of axial displacement of the sensing rollers is also disclosed.

FIG. 1.

MEASURING VEHICLE TRACK ALIGNMENT

This invention relates to the measurement of vehicle front end parameters and in particular to a method and apparatus for measuring the parameter of front wheel track alignment (toe-in or toe-out).

The following United States patents constitute the prior art most relevant to the present invention and known to the applicant at this time:

2,270,230 Pearce;

2,598,599 Pleasance;

2,601,187 Volis;

2,648,140 Wilkerson;

2,676,415 Love;

3,187,440 Merrill;

3,208,154 Pancoast;

3,305,935 Cady et al;

3,417,479 Hirmann;

3,453,740 Sakamoto;

3,473,347 Leeper;

3,579,845 Hunter;

3,587,325 Hunter;

3,793,734 Merrill

3,812,592 Haupt;

3,871,106 Hegenbart;

3,908,280 Murakami et al;

4,055,899 Dean;

4,158,961 Ben-David

Of the aforementioned patents 2,601,187 (Volis) is considered the most relevant. However, the apparatus disclosed in the Volis patent is extremely complex and in fact the apparatus will not operate in the manner described as continuous operation of the drive motor 25 will cause continuous axial movement of the drum 14 in the one direction due to toe-in or toe-out. Consequently a steady state reading will not be reached unless there is zero toe-in or toe-out. Therefore an absolute reading of the track alignment cannot be achieved and whilst Volis presumably purports to provide an improvement over the earlier scuff testers there is no disclosure of a practical method for operating the apparatus. According to the earlier scuff testers the vehicle front wheels are driven along a pair of parallel boards which are displaceable at right angles to their length. Any toe-in tends to move the boards apart by an amount determined by the amount of toe-in and the length of the boards whilst toe-out tends to move the boards in the opposite direction. Because the length of the boards is relatively short, and because there are factors other than toe-in which effect the sideways movement, this type of gauge, although still widely used, is not considered to be sufficiently accurate. A more sophisticated form of scuff tester is described in the aforementioned Wilkerson patent 2,648,140 but again the accuracy is not sufficient to encourage wide commercial use.

A further problem of the prior art concerns the difficulty in alignment of the vehicle longitudinal axis with the apparatus. In other words it is necessary for the transverse drum 14 of Volis or any similar transversely extending measuring or sensing roller to be at right angles to the longitudinal axis of the vehicle and none of the prior art provides a simple and accurate means for achieving such alignment.

It is therefore an object of this invention to provide an improved method and apparatus which overcomes one or more of the disadvantages of the prior art.

Accordingly the invention provides a method of measuring vehicle wheel toe-in or toe-out parameters comprising the steps of supporting a vehicle wheel for rotation in a manner whereby the wheel supports its normal share of vehicle weight, placing a sensing roller against the tread surface of the tyre on said wheel at the lowermost point of said tyre, said sensing roller being axially slidable on an axis of rotation extending transverse of the plane of rotation of said wheel whereby any said toe-in or toe-out of said wheel causes, during rotation of said wheel, axial displacement of said sensing roller, rotating said wheel through a limited angular displacement equivalent to a known effective linear displacement of said vehicle so as to cause rotation of said sensing roller, measuring the axial displacement of said sensing roller and computing the toe-in or toe-out of said wheel from said axial and linear displacements.

In a further aspect the invention provides an apparatus for measuring vehicle wheel toe-in or toe-out parameters comprising a support structure extending between the front wheels of the vehicle and adapted for pivotal movement about a vertical axis between said wheels, a pair of spaced support rollers adjacent each front wheel and rotatably mounted on said structure, each pair of support rollers being adapted, in use, to rotatably support a respective vehicle front wheel in a manner wherein the wheels support their normal share of vehicle weight, a separate sensing roller for each front wheel, each sensing roller being mounted on said structure and being adapted to make contact with the tread surface of a tyre on the respective said wheel so as to be rotated by rotation of said wheel, each sensing roller being arranged at the lowermost point of said tyre and being axially slidable on an axis of rotation extending transverse of the plane of rotation of said wheel whereby any toe-in or toe-out of said wheel causes, during rotation, an axial displacement of the respective sensing roller at a rate dependent upon said toe-in or toe-out of said wheel, and means to measure said axial displacement.

In order that the invention may be more readily understood reference should now be made to the accompanying drawings wherein:

Fig. 1 is a simplified schematic side elevation of an apparatus suitable for performing the method according to the invention,

Fig. 2 is an underside view of the apparatus according to Fig. 1 and

Fig. 3 is a simplified schematic plan view showing a mounting platform for the apparatus of Figs. 1 and 2.

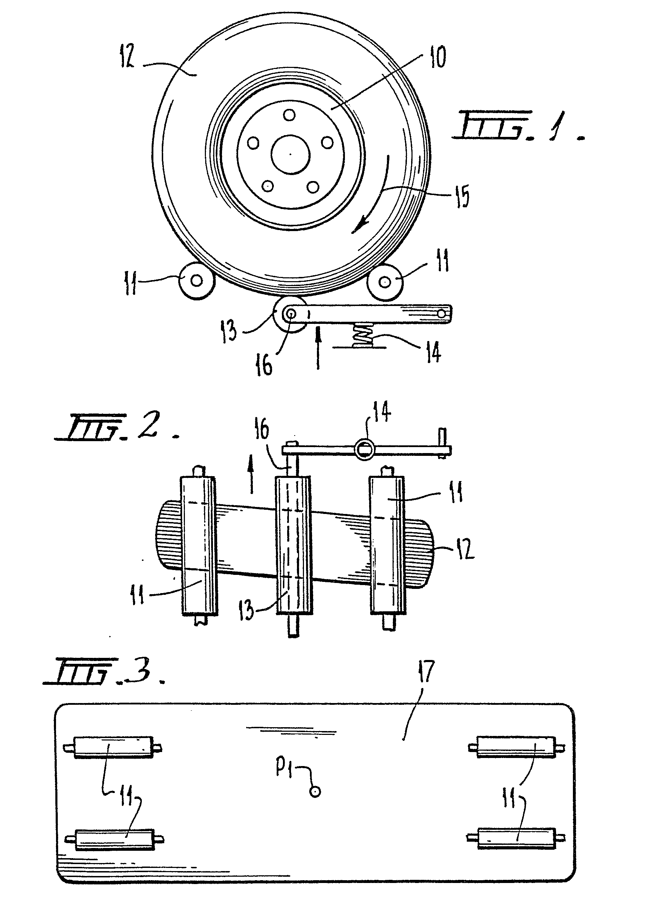

Referring now to Fig. 1 there is shown a simple track alignment measuring gauge comprising support rollers 11 which are arranged to rotatably support a vehicle front wheel 10 in a manner wherein the wheel 10 supports its normal share of vehicle weight. A measuring or sensing roller 13 is arranged between the support rollers 11 at the lowermost point of a tyre 12 on the wheel 10. The sensing roller 13 is spring biased by spring 14 against the tyre tread surface and the axis of rotation of the sensing roller 13 is transverse to the plane of rotation of the wheel 10. More precisely, the axis of rotation (axle 16) of the sensing roller 13 should be arranged normal to a vertical plane extending longitudinally of the vehicle under test, that is normal to the true forward direction of the vehicle. The sensing roller 13 is axially slidable on the axle 16 and thus any toe-in or toe-out of the wheel 10 will cause, during rotation of the wheel, axial sliding movement of the roller 13 on the axle 16.

Thus, rotation of the wheel 10 in the direction shown by the arrow 15 in Fig. 1 will cause the sensing roller 13 to move in the direction shown by the arrow in Fig. 2. According to a basic form of the invention a graduated scale is provided either on the axle 16 or adjacent the roller 13 in order to allow measurement of the axial displacement of the roller 13. The method of measuring toe-in then comprises rotating the wheel 10 to cause the tyre circumference to move through an angular displacement equivalent to a known linear displacement and measuring the axial displacement of the roller 13. This may be achieved by rotating the wheel 10 through a known angular displacement but this requires knowledge of the outside diameter of the tyre 12 in order to calculate linear displacement. Alternatively, the wheel 10 could be rotated to turn the rollers 11 or the roller 13 through a known angular displacement whereby a specific linear displacement of the wheel would occur irrespective of tyre outside diameter. For the purpose of rotating the wheel 10 one of the rollers 11 could be rotated, in which case the roller 11 would be rotated a fixed angular displacement, say ten revolutions.

According to the most basic form of the invention the wheel may be rotated manually by means of a handle (not shown) connected to one of the rollers 11 and in this form the invention provides a simple and inexpensive apparatus suitable for small service stations and even the home handyman. In a more sophisticated version of the invention apparatus (not shown) could be provided to drive the wheel 10 or one of the rollers 11 through a predetermined angular distance as well as automatically determine the displacement of the roller 13. A suitable transducer (not shown), for example, could provide an electrical signal indicative of the displacement of the roller 13 and a micro-processor could be used to process the signal in relation to information about tyre linear displacement so as to provide a read out of toe-in or toe-out. From knowledge of the linear displacement of the tyre surface and the axial displacement toe-in or toe-out may be easily computed by a simple look-up table.

It should be appreciated that the apparatus described thus far is semi-dynamic in the sense that the wheel 10 cannot be rotated continuously as the roller 13 would reach a limit of displacement. According to a further sophistication (not shown) the apparatus may be made fully dynamic by using a sensing roller 13 which is axially biased to a central position and periodically lifting the roller off the tyre tread surface during a measurement. The lifting-off may be carried out by various means which, however, must be synchronized to the support rollers 11 or otherwise synchronized to the angular displacement of the wheel so that a predetermined angular distance is maintained with every lift. The sensing roller 13 will then develop a displacement which, plotted against time, represents a sawtooth wave. Toe-in or toe-out may be evaluated in terms of this sawtooth wave either by displaying the rate of travel or the maximum excursion or by other suitable means.  Again a micro-processor may be used to process the results and provide a read out of the actual measurement which may be an individual reading for each wheel or a differential reading between the wheels thus providing total toe-in or toe-out.

Referring now to Fig. 3 there is shown a mounting platform 17 which forms part of the apparatus according to a further embodiment of the invention.  Two pairs of support rollers 11 are provided on the platform 17, each

pair being adapted to support one of the front vehicle wheels. A separate sensing roller is also provided for each wheel but the sensing rollers are not shown in Fig. 3. The apparatus of Fig. 3 provides for simple alignment of the vehicle longitudinal axis with the apparatus. As shown the platform 17 is pivoted about a vertical axis at point $P^1$ mid-way between the pairs of rollers 11. In use the platform 17 is arranged such that the front vehicle wheels may be driven onto the respective pairs of support rollers 11. The apparatus is thus automatically orientated in the correct position with respect to the vehicle because, each wheel, in coming to rest between the two support rollers 11, will exert a force against the machine rollers 11 until the pressure against each roller is similar. Thus the platform 17 will pivot about axis $P^1$ to a position wherein the axes of the support rollers 11 is in a direction normal to the longitudinal or true forward direction of the vehicle. Whilst this alignment is dependent upon the accuracy of the vehicle front end, this accuracy is sufficient for normal purposes.

It should be evident from the description herein that the present invention provides a simple apparatus for measuring vehicle track alignment. The method according to the invention is simple to perform and would be well within the competence of the home handyman since it does not involve the use of complex equipment. Whilst the method and apparatus does not provide for measurement of wheel camber or caster angle most present-day front suspensions are of the McPherson strut type, which rarely allows for camber adjustment and almost never permits caster to be varied.

In order to avoid sideways displacement of the vehicle during measurement a preferred form of the method involves testing or operating one vehicle wheel whilst the other remains stationary to thus hold the vehicle against transverse movement. In one form therefore, the apparatus could consist of a single pair of support rollers

0011491

11 and associated sensing roller 13 which could be moveable from one side of the vehicle to the other to facilitate measurement on both wheels. It would of course be necessary to carefully align the apparatus with the longitudinal direction of the vehicle and in one preferred form the apparatus could be slidably mounted on a frame so as to slide between opposite sides of the vehicle. This would ensure consistency between the readings on opposite sides although it would still be necessary to align the vehicle with the frame.

According to a variation of the apparatus described the sensing rollers 13 on opposite sides may be extended to overlap in a manner such that a direct differential reading between the two may be achieved. For example, one sensing roller may be extended inwardly and adapted to fit concentrically within the other in a telescoping fashion whereby a graduated scale on the outside of the inner roller would facilitate a differential reading. Other suitable arrangements for obtaining such a reading could be readily envisaged.

Claims:

1.        A method of measuring vehicle wheel toe-in or toe-out parameters comprising the steps of supporting a vehicle wheel for rotation in a manner whereby the wheel supports its normal share of vehicle weight, placing a sensing roller against the tread surface of a tyre on said wheel at the lowermost point of said tyre, said sensing roller being axially slidable on an axis of rotation extending transverse of the plane of rotation of said wheel whereby any said toe-in or toe-out of said wheel causes, during rotation of said wheel, axial displacement of said sensing roller, rotating said wheel through a limited angular displacement equivalent to a known effective linear displacement of said vehicle so as to cause rotation of said sensing roller, measuring the axial displacement of said sensing roller and computing the toe-in or toe-out of said wheel from said axial and linear displacements.

2.        A method according to claim 1 wherein said step of supporting said wheel for rotation comprises supporting said wheel on a pair of spaced support rollers arranged on either side of said sensing roller and parallel thereto.

3.        A method according to claim 2 wherein said step of rotating said wheel comprises manually rotating said wheel by rotating one of said support rollers through a predetermined angular displacement.

4.        A method according to claim 1, 2 or 3 further comprising conducting the measurement on one vehicle front wheel whilst the other front wheel is stationary under normal vehicle weight and subsequently conducting said measurement on said other front wheel whilst said one vehicle front wheel is stationary under normal vehicle weight so as to prevent transverse movement of said vehicle during said measurements.

5.        Apparatus for measuring vehicle wheel toe-in or toe-out parameters comprising a support structure extending between the front wheels of the vehicle and adapted for pivotal movement about a vertical axis between said wheels, a pair of spaced support rollers adjacent each front wheel and rotatably mounted on said structure, each pair of support rollers being adapted, in use, to rotatably support a respective vehicle front wheel in a manner wherein the wheels support their normal share of vehicle weight, a separate sensing roller for each front wheel, each sensing roller being mounted on said structure and being adapted to make contact with the tread surface of a tyre on the respective said wheel so as to be rotated by rotation of said wheel, each sensing roller being arranged at the lowermost point of said tyre and being axially slidable on an axis of rotation extending transverse of the plane of rotation of said wheel whereby any toe-in or toe-out of said wheel causes, during rotation, an axial displacement of the respective sensing roller at a rate dependent upon ad toe-in or toe-out of said wheel, and means to measure said axial displacement.

6.        Apparatus as defined in claim 5 including means to independently rotate said wheels through a fixed angular displacement, said means to measure said axial displacement comprising transducer means adapted to provide an electrical signal indicative of said displacement and said apparatus further including electrical or electronic processing means to process said signal and provide an indication of the toe-in or toe-out of the vehicle wheels.

7.        Apparatus as defined in claim 5 said sensing rollers are spring biased to a particular axial start posit and each said wheel is rotated continuously during said measurement, said sensing rollers are periodically lifted from contact with said tread surface in synchronism with rotation of said support rollers such that said sensing rollers develop a displacement which, plotted against time, represents a sawtooth wave and said toe-in or toe-out is evaluated in terms of said sawtooth wave either by means of the rate of travel or maximum excursion of said sensing roller.

8.      Apparatus as defined in claim 7 comprising transducer means adapted to provide an electrical signal indicative of said displacement, and said apparatus further including electrical or electronic processing means to process said signal and provide an indication of the toe-in or toe-out of the vehicle wheels.

9.      Apparatus as defined in claim 5 including respective means to connect a handle to one of the support rollers of each said pair for the purpose of rotating said one support roller through a predetermined angular displacement to cause rotation of said wheel.

FIG. 1.

FIG. 2.

FIG. 3.

# 0011491

European Patent Office

**EUROPEAN SEARCH REPORT**

Application number

EP 79 30 2587

| DOCUMENTS CONSIDERED TO BE RELEVANT | | | CLASSIFICATION OF THE APPLICATION (Int. Cl. |
|---|---|---|---|
| Category | Citation of document with indication, where appropriate, of relevant passages | Relevant to claim | |
| X | <u>DE - A - 1 773 780</u> (E. WAGNER)<br>* Page 2, line 18 to page 3, line 7; page 4, line 20 to page 6, line 16 * | 1,2,5, 6,7,8 | G 01 B 5/255 |
| | <u>US - A - 1 609 996</u> (F.H. EVANS)<br>* The whole document * | 1,3,5, 9 | |
| | <u>US - A - 3 812 592</u> (H.O. HAUPT)<br>* Column 4, line 48 to column 5, line 45 * | 4,6 | TECHNICAL FIELDS SEARCHED (Int.Cl. 3) |
| | <u>US - A - 3 411 346</u> (R. GAGLIARDI)<br>* Column 2, lines 12-36 * | 5 | G 01 B |
| A | <u>US - A - 1 911 725</u> (G.H. TABER)<br>* Page 2, lines 82-99 * | 1,3,5 | |
| A | <u>GB - A - 1 484 245</u> (E.M. ARTHUR)<br>* Page 3, lines 20-65 * | 1,5 | |

The present search report has been drawn up for all claims

| Place of search | Date of completion of the search | Examiner |
|---|---|---|
| The Hague | 07-02-1980 | CARETTE |

EPO Form 1503.1  06.78